(19) Europäisches Patentamt
European Patent Office
Office européen des brevets

(11) EP 4 700 082 A1

(12) **EUROPEAN PATENT APPLICATION**
published in accordance with Art. 153(4) EPC

(43) Date of publication:
**25.02.2026 Bulletin 2026/09**

(21) Application number: **24815572.3**

(22) Date of filing: **30.05.2024**

(51) International Patent Classification (IPC):
***C08L 9/00*** *(2006.01)* ***B60C 1/00*** *(2006.01)*
***C08K 3/22*** *(2006.01)* ***C08K 3/36*** *(2006.01)*
***C08K 5/5415*** *(2006.01)* ***C08K 5/548*** *(2006.01)*

(52) Cooperative Patent Classification (CPC):
Y02T 10/86

(86) International application number:
**PCT/JP2024/019885**

(87) International publication number:
**WO 2024/248092 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.06.2023 JP 2023090616**

(71) Applicant: **The Yokohama Rubber Co., Ltd.**
**Hiratsuka-shi, Kanagawa 254-8601 (JP)**

(72) Inventor: **HIJIKATA, Kensuke**
**Hiratsuka-shi, Kanagawa 254-8601 (JP)**

(74) Representative: **Dilg, Haeusler, Schindelmann**
**Patentanwaltsgesellschaft mbH**
**Leonrodstraße 58**
**80636 München (DE)**

(54) **RUBBER COMPOSITION FOR TIRE AND TIRE USING SAME**

(57) A rubber composition for a tire of the present invention contains a diene-based rubber, silica, a sulfur-containing silane coupling agent, and an alkylalkoxysilane compound. A blended amount a of the silica is from 80 to 300 parts by mass per 100 parts by mass of the diene-based rubber, and a blended amount b of the sulfur-containing silane coupling agent and a blended amount c of the alkylalkoxysilane compound satisfy Expressions (1) and (2) described below:

$$0.03 < (b/a) < 0.06 \quad (1),$$

$$c/b \geq 1.5 \quad (2)$$



Processed by Luminess, 75001 PARIS (FR)

## Description

### Technical Field

The present invention relates to a rubber composition for a tire and a tire using the rubber composition for a tire, and particularly relates to a rubber composition for a tire that has excellent scorch resistance without impairing wet grip performance, and a tire using the rubber composition for a tire.

### Background Art

Generally, tires for traveling on dry road surfaces and tires for traveling on wet road surfaces are prepared as pneumatic racing tires, and optimal tires for each of these tires are selected according to the weather and road surface state during travel. For a racing tire for traveling on wet road surfaces, a method of blending a large amount of silica, blending silica having a high specific surface area, or the like is employed in order to enhance wet grip performance. However, silica has low affinity with a rubber component, and cohesiveness between silicas is high, and thus if silica is simply blended in the rubber component, the silica is not dispersed, which leads to the problem that an effect of improving the wet grip performance cannot be achieved sufficiently.

To solve such a problem, a silane coupling agent capable of reacting with silica is generally blended in a rubber composition containing silica. However, when a large amount of a silane coupling agent is blended in accordance with the blending of a large amount of silica or the blending of silica having a high specific surface area, a scorch time is shortened, and socalled burning, in which vulcanization proceeds during kneading and extrusion to deteriorate processability, is likely to occur.

Examples of known techniques aiming to enhance the wet grip performance of a tire include the following Patent Documents 1 to 6.

### Citation List

### Patent Document

Patent Document 1: WO 2013/133432
Patent Document 2: JP 2019-104484 A
Patent Document 3: JP 6969243 B
Patent Document 4: JP 5888361 B
Patent Document 5: JP 5644838 B
Patent Document 6: JP 7397272 B

### Summary of Invention

### Technical Problem

However, known techniques do not describe or suggest any technical idea of combining a sulfur-containing silane coupling agent and an alkylalkoxysilane compound appropriately to improve both wet grip performance and scorch resistance. For example, Patent Document 6 describes a cap tread rubber obtained by blending silica, a terpene resin, a silane coupling agent, and alkyltriethoxysilane in a modified diene-based rubber, but does not describe or suggest ratios of silica, a sulfur-containing silane coupling agent, and an alkylalkoxysilane compound of an embodiment of the present invention as described below, and does not describe improvement of scorch resistance.

Therefore, an object of the present invention is to provide a rubber composition for a tire that has excellent scorch resistance without impairing wet grip performance, and a tire using the rubber composition for a tire.

### Solution to Problem

As a result of intensive studies, the present inventors have found that the above problem can be solved by specifying a blended amount of silica and the type of alkylalkoxysilane compound in a rubber composition for a tire containing a diene-based rubber, silica, a sulfur-containing silane coupling agent, and an alkylalkoxysilane compound, and further specifying a blending ratio between the sulfur-containing silane coupling agent and the alkylalkoxysilane compound, and thus have been able to complete the present invention.

That is, the present invention provides a rubber composition for a tire containing a diene-based rubber, silica, a sulfur-containing silane coupling agent, and an alkylalkoxysilane compound, a blended amount of the silica being from 80 to 300 parts by mass per 100 parts by mass of the diene-based rubber, the alkylalkoxysilane compound being alkyldiethoxysilane or alkyltriethoxysilane, and blended amounts of the sulfur-containing silane coupling agent and the alkylalkoxysilane compound satisfying Expressions (1) and (2) described below:

$$0.03 < (b/a) < 0.06 \quad (1)$$

$$c/b \geq 1.5 \quad (2)$$

where a represents a blended amount (parts by mass) of the silica per 100 parts by mass of the diene-based rubber, b represents a blended amount (parts by mass) of the sulfur-containing silane coupling agent per 100 parts by mass of the diene-based rubber, and c represents a blended amount (parts by mass) of the alkylalkoxysilane compound per 100 parts by mass of the diene-based rubber.

Further, the present invention provides a tire using the rubber composition for a tire described above.

Advantageous Effects of Invention

According to an embodiment of the present invention, the rubber composition for a tire contains a diene-based rubber, silica, a sulfur-containing silane coupling agent, and an alkylalkoxysilane compound, a blended amount of the silica may be from 80 to 300 parts by mass per 100 parts by mass of the diene-based rubber, the alkylalkoxysilane compound may be alkyldiethoxysilane or alkyltriethoxysilane, and blended amounts of the sulfur-containing silane coupling agent and the alkylalkoxysilane compound may satisfy Expressions (1) and (2) described above. Thus, it is possible to provide a rubber composition for a tire that has excellent scorch resistance without impairing wet grip performance, and a tire using the rubber composition for a tire.

As described above, in order to enhance the wet grip performance of the tire, a method of blending a large amount of silica, blending silica having a high specific surface area, or the like is employed. However, silica has a low affinity with a rubber component, and therefore, it is necessary to blend a large amount of a silane coupling agent, but this method has a problem that the scorch time is shortened to deteriorate processability (deterioration of the scorch resistance). In particular, when a sulfur-containing silane coupling agent having excellent dispersibility of silica but high reactivity is used, the problem tends to be remarkable. Therefore, in an embodiment of the present invention, by using a specific alkylalkoxysilane compound which has an effect on the dispersibility of silica but does not contain sulfur, and specifying the ratio between the sulfur-containing silane coupling agent and the alkylalkoxysilane compound, the high reactivity of the sulfur-containing silane coupling agent is suppressed to improve the scorch resistance, while a silica dispersing effect inherent in the sulfur-containing silane coupling agent is maintained. Further, the wet grip performance is also successfully maintained.

Description of Aspects

The present invention will be described in further detail below.

Diene-based Rubber

The diene-based rubber used in the rubber composition for a tire of an embodiment of the present invention (hereinafter, sometimes simply referred to as rubber composition) preferably contains a styrene-butadiene copolymer rubber (SBR) as an essential component. When the entire amount of the diene-based rubber used in an embodiment of the present invention is taken as 100 parts by mass, a blended amount of SBR may be determined by appropriately taking into account various conditions such as air temperature and weather, for example, in a case of a racing application. The blended amount can be, for example, 70 parts by mass or more, preferably 85 parts by mass or more, and more preferably 100 parts by mass. In an embodiment of the present invention, besides the SBR, any diene-based rubber that can be blended in ordinary rubber compositions can be used, and examples thereof include natural rubber (NR), isoprene rubber (IR), butadiene rubber (BR), acrylonitrile-butadiene copolymer rubber (NBR), and ethylene-propylene-diene terpolymer (EPDM). These diene rubbers may be used alone, or two or more thereof may be used in combination.

The molecular weight and the microstructure of the SBR used in an embodiment of the present invention are not particularly limited. The SBR is preferably terminal-modified with an amine, amide, silyl, alkoxysilyl, carboxyl, or hydroxyl group, or the like.

In addition, from the perspective of improving the effects of the present invention, the SBR used in an embodiment

of the present invention preferably has a styrene content of from 20 to 45 mass% and/or a glass transition temperature (Tg) of from -60 to -10°C (when the SBR is oil-extended, the Tg is a value measured excluding the oil used for the oil extension).

The glass transition temperature (Tg) in an embodiment of the present invention refers to a temperature at a midpoint of a transition region obtained by performing a thermography measurement with differential scanning calorimetry (DSC) at a rate of temperature increase of 20°C/minute.
is preferred.

Silica

The silica used in an embodiment of the present invention can be socalled silica having a high specific surface area. Specifically, the silica used in an embodiment of the present invention has a nitrogen adsorption specific surface area $N_2SA$ of preferably from 100 to 300 $m^2/g$, and more preferably from 130 to 270 $m^2/g$.

Note that the $N_2SA$ is measured in accordance with JIS K 6217-2. In an embodiment of the present invention, silica made from a biomass material such as rice husks may be used.

Sulfur-Containing Silane Coupling Agent

The sulfur-containing silane coupling agent used in an embodiment of the present invention is not limited as long as the sulfur-containing silane coupling agent can be used in a rubber composition containing silica, and examples thereof include bis-(3-triethoxysilylpropyl)tetrasulfide, bis(3-triethoxysilylpropyl)disulfide, 3-trimethoxysilylpropylbenzothiazol tetrasulfide, γ-mercaptopropyltriethoxysilane, and 3-octanoylthiopropyltriethoxysilane. Further, a sulfur-containing silane coupling agent represented by Expression (2) described below, which is described in, for example, WO2014/002750, can also be used.

$$(A)_a(B)_b(C)_c(D)_d(R1)_cSiO_{(4-2a-b-c-d-c)/2} \quad (2)$$

where A represents a divalent organic group having a sulfide group, B represents a monovalent hydrocarbon group having from 5 to 10 carbon atoms, C represents a hydrolyzable group, D represents an organic group having a mercapto group, R1 represents a monovalent hydrocarbon group having from 1 to 4 carbon atoms, and a to e satisfy the relationships: $0 \leq a < 1$, $0 < b < 1$, $0 < c < 3$, $0 < d < 1$, $0 \leq e < 2$, and $0 < 2a + b + c + d + e < 4$.

In an embodiment of the present invention, even when a silane coupling agent having a mercapto group with high reactivity is used, the scorch resistance can be improved.

Alkylalkoxysilane Compound

The alkylalkoxysilane compound used in an embodiment of the present invention is alkyldiethoxysilane or alkyltriethoxysilane, and the alkyldiethoxysilane can be represented by Expression (3) described below, and the alkyltriethoxysilane can be represented by Expression (4) described below.

[Chem. 1]

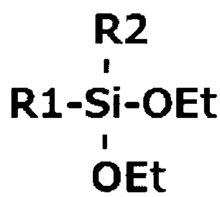

(3)

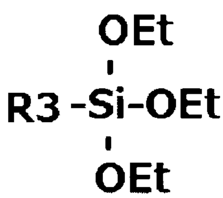

(4)

In Expressions (3) and (4), R1, R2, and R3 each independently represent an alkyl group having from 1 to 20

carbon atoms, and Et represents an ethyl group.

As the alkyl groups having from 1 to 20 carbon atoms as R1 and R2, methyl groups are especially preferable.

The alkyl group having from 1 to 20 carbon atoms as R3 is especially preferably an alkyl group having from 7 to 20 carbon atoms, and specific examples thereof include a heptyl group, an octyl group, a nonyl group, a decyl group, an undecyl group, and a dodecyl group. Among these, from the perspective of compatibility with the diene-based rubber, an alkyl group having from 8 to 10 carbon atoms is more preferable, and an octyl group and a nonyl group are particularly preferable.

Aluminum Hydroxide

In an embodiment of the present invention, aluminum hydroxide may be blended from the perspective of improving the effect. The aluminum hydroxide is not particularly limited in terms of conditions such as its particle size distribution, and can be appropriately selected from known ones. Examples of commercially available products include BF013, available from Nippon Light Metal Co., Ltd.

Carbon Black

In an embodiment of the present invention, carbon black can be blended. The carbon black is not particularly limited and, for example, carbon black of various grades, such as SAF-HS, SAF, ISAF-HS, ISAF, ISAF-LS, IISAF-HS, HAF-HS, HAF, HAF-LS, and FEF, can be used. A nitrogen adsorption specific surface area $N_2SA$ of the carbon black is preferably from 100 to 250 $m^2/g$.

Tackifier Resin

In the rubber composition of an embodiment of the present invention, a tackifier resin can be blended in order to further improve its effect.

The tackifier resin used in an embodiment of the present invention is not particularly limited, and specific examples thereof include phenol-based resins (e.g., phenol resins, phenol-acetylene resins, and phenol-formaldehyde resins); coumarone-based resins (e.g., coumarone resins, coumarone-indene resins, and coumarone-indene-styrene resins); terpene-based resins (e.g., terpene resins, modified terpene resins (aromatic modified terpene resins, etc.), terpene phenol resins); styrene resins; acrylic resins; rosin-based resins (e.g. rosin, rosin esters, hydrogenated rosin derivatives), hydrogenated terpene resins); petroleum resins (e.g., C5 petroleum resins such as dicyclopentazine resins, C9 petroleum resins, alicyclic petroleum resins, and C5/C9 copolymerized petroleum resins); xylene-based resins (e.g., xylene resins, xylene-acetylene resins, and xylene-formaldehyde resins); $\alpha$-pinene resins; and aliphatic saturated hydrocarbon resins. Among them, for the reason of superior effects and the like of the present invention, at least one selected from the group consisting of C9 petroleum resins, phenol-based resins, coumarone indene resins, terpene resins, modified terpene resins, styrene resins, acrylic resins, rosin-based resins, and dicyclopentadiene resins are preferable.

Examples of the modified terpene resins include aromatic modified terpene resins, and for example, aromatic modified terpene resins obtained by polymerizing terpene resins such as $\alpha$-pinene, $\beta$-pinene, dipentene and limonene with aromatic compounds such as styrene, $\alpha$-methylstyrene, vinyltoluene and indene are effectively used. As the aromatic modified terpene resin, a commercially available product can be used, and examples thereof include YS Resin TO-125 (terpene styrene resin, Mw = 2000, softening point: from 120 to 130°C), available from Yasuhara Chemical Co., Ltd.

Blending Proportion of Rubber Composition

Furthermore, in the rubber composition of an embodiment of the present invention, the blended amount of the silica is from 80 to 300 parts by mass, preferably from 100 to 250 parts by mass per 100 parts by mass of the diene-based rubber. If the blended amount of the silica is less than 80 parts by mass, tan $\delta$ (0°C) decreases, and if the blended amount is more than 300 parts by mass, the scorch resistance is deteriorated.

In the rubber composition of an embodiment of the present invention, the blended amount of the sulfur-containing silane coupling agent is preferably from 3.5 to 5.5 mass% and more preferably from 4 to 5 mass%, relative to the blended amount of the silica.

In the rubber composition of an embodiment of the present invention, the blended amount of the alkylalkoxysilane compound is preferably from 10 to 20 parts by mass, and more preferably from 12 to 18 parts by mass, per 100 parts by mass of the diene-based rubber.

In the rubber composition of an embodiment of the present invention, in order to achieve the effects of the present invention, the blended amounts of the sulfur-containing silane coupling agent and the alkylalkoxysilane compound need to

satisfy Expressions (1) and (2) described below, and more preferably satisfy Expressions (11) and (21) described below.

$$0.03 < (b/a) < 0.06 \quad (1)$$

$$c/b \geq 1.5 \quad (2)$$

$$0.032 < (b/a) < 0.058 \quad (11)$$

$$1.6 < c/b < 5.0 \quad (21)$$

where a represents a blended amount (parts by mass) of the silica per 100 parts by mass of the diene-based rubber, b represents a blended amount (parts by mass) of the sulfur-containing silane coupling agent per 100 parts by mass of the diene-based rubber, and c represents a blended amount (parts by mass) of the alkylalkoxysilane compound per 100 parts by mass of the diene-based rubber.

In one aspect of the present invention, when aluminum hydroxide is used, a blended amount thereof is preferably 15 parts by mass or more, and more preferably from 20 to 80 parts by mass per 100 parts by mass of the diene-based rubber.

When carbon black is used, a blended amount thereof is preferably from 3 to 50 parts by mass per 100 parts by mass of the diene-based rubber.

When a tackifier resin is used, a blended amount thereof is preferably from 10 to 100 parts by mass per 100 parts by mass of the diene-based rubber.

Additional Components

The rubber composition in an embodiment of the present invention can be blended with, in addition to the components described above, vulcanizing or crosslinking agents; vulcanizing or crosslinking accelerators; various fillers, such as clay, talc, and calcium carbonate; anti-aging agents; plasticizers; resins; and various additives commonly blended in rubber compositions, such as curing agents. The additives are kneaded by a common method to obtain a composition that can then be used for vulcanization or crosslinking. A blended amount of such an additive may be any common blended amount in the related art, so long as the object of the present invention is not hindered.

The method of producing the rubber composition according to an embodiment of the present invention is not particularly limited, and specific examples thereof include a method whereby the above-mentioned components are kneaded using a known method and device (e.g., Banbury mixer, kneader, and roll). When the composition of an embodiment of the present invention contains a vulcanizing agent (e.g., sulfur) and/or a vulcanization accelerator, the components other than the vulcanizing agent or the vulcanization accelerator are preferably mixed first at a high temperature (preferably from 100 to 155°C) and cooled, and then the vulcanizing agent and/or the vulcanization accelerator are/is mixed, for the reason of superior effects and the like of the present invention with respect to a resulting composition. The composition according to an embodiment of the present invention can be vulcanized or crosslinked under known vulcanizing or crosslinking conditions.

The rubber composition of an embodiment of the present invention can be suitably used for a tread, especially a cap tread, of a tire, and preferably used for a tread, especially a cap tread, of a racing tire. The tire of an embodiment of the present invention is preferably a pneumatic tire, and can be inflated with air, an inert gas such as nitrogen, or another gas.

Examples

The present invention will be described below in further detail by way of Examples and Comparative Examples, but the present invention is not limited to these examples.

Standard Example 1, Examples 1 to 6, and Comparative Examples 1 to 6

According to the blending proportions (parts by mass) presented in Table 1, the components other than the vulcanization components (vulcanization accelerator and sulfur) were kneaded for 5 minutes in a 1.7-L sealed Banbury Mixer. The obtained mixture was then discharged from the mixer and cooled to room temperature. Thereafter, the resultant composition was placed into the same Banbury mixer again, and the vulcanization components were added to and kneaded with the composition, to thereby produce a rubber composition. Next, the rubber composition thus obtained was

subjected to press vulcanization in a predetermined mold at 150°C for 30 minutes to prepare a vulcanized rubber test piece. Then the vulcanized rubber test piece was subjected to the test methods shown below to measure the physical characteristics thereof.

Scorch time: The scorch time was tested at 125°C in accordance with JIS K 6300. The results are indicated as index values with respect to the value of Standard Example 1 that is taken as 100. A larger index value indicates superior scorch resistance.

Wet grip performance: tan $\delta$ (0°C) was measured under conditions: an elongation deformation strain of 10 $\pm$ 2%, a vibration frequency of 20 Hz, and a temperature of 0°C, using a viscoelastic spectrometer (available from Toyo Seiki Seisaku-sho, Ltd.) in accordance with JIS K 6394:2007. The results are expressed as index values with respect to Standard Example 1 that is taken as 100. A larger index value indicates better wet grip performance.

The results are shown in Table 1.

Standard Example 2, Examples 7 to 12, and Comparative Examples 7 to 12

The aforementioned "Standard Example 1, Examples 1 to 6, and Comparative Examples 1 to 6" was repeated except for changing the blended amounts of the materials as listed in Table 2. The results are shown in Table 2. The results of Examples 7 to 12 and Comparative Examples 7 to 12 are values with respect to Standard Example 2 in Table 2.

Standard Example 3, Examples 13 to 18, and Comparative Examples 13 to 18

The aforementioned "Standard Example 1, Examples 1 to 6, and Comparative Examples 1 to 6" was repeated except for changing the blended amounts of the materials as listed in Table 3. The results are shown in Table 3. The results of Examples 13 to 18 and Comparative Examples 13 to 18 are values with respect to Standard Example 3 in Table 3.

[Table 1]

| | Standard Example 1 | Comparative Example 1 | Comparative Example 2 | Comparative Example 3 | Comparative Example 4 | Example 1 | Example 2 | Example 3 | Example 4 | Example 5 | 6 | Comparative Example 5 | Comparative Example 6 |
|---|---|---|---|---|---|---|---|---|---|---|---|---|---|
| SBR *1 | 137.5 | 137.5 | 137.5 | 137.5 | 137.5 | 137.5 | 137.5 | 137.5 | 137.5 | 137.5 | 137.5 | 137.5 | 137.5 |
| Silica (blended amount a) *2 | 100.0 | 100.0 | 100.0 | 100.0 | 100.0 | 100.0 | 100.0 | 100.0 | 100.0 | 100.0 | 100.0 | 100.0 | 100.0 |
| Carbon black *3 | 10.0 | 10.0 | 10.0 | 10.0 | 10.0 | 10.0 | 10.0 | 10.0 | 10.0 | . 10.0 | 10.0 | 10.0 | 10.0 |
| Aluminum hydroxide *4 | - | - | - | - | - | - | - | - | - | - | 20.0 | - | - |
| Silane coupling agent 1 (blended amount b) *6 | 6.0 | 10.0 | - | 10.0 | 4.0 | 4.0 | 5.0 | 4.0 | - | 5.0 | 4.0 | 2.0 | 10.0 |
| Silane coupling agent 2 (blended amount b) *7 | - | - | 6.0 | - | - | - | - | - | 4.0 | - | - | - | - |
| Alkyltriethoxysilane (blended amount c) *8 | 5.0 | 5.0 | 5.0 | 10.0 | 5.0 | 10.0 | 10.0 | 15.0 | 10.0 | - | 10.0 | 10.0 | 20.0 |
| Alkyldiethoxysilane (blended amount c) *9 | - | - | - | - | - | - | - | - | - | 10.0 | - | - | - |
| Oil *10 | 20.0 | 20.0 | 20.0 | 20.0 | 20.0 | 20.0 | 20.0 | 20.0 | 20.0 | 20.0 | 20.0 | 20.0 | 20.0 |
| Stearic acid *11 | 2.0 | 2.0 | 2.0 | 2.0 | 2.0 | 2.0 | 2.0 | 2.0 | 2.0 | 2.0 | 2.0 | 2.0 | 2.0 |
| Zinc oxide *12 | 2.0 | 2.0 | 2.0 | 2.0 | 2.0 | 2.0 | 2.0 | 2.0 | 2.0 | 2.0 | 2.0 | 2.0 | 2.0 |
| Anti-aging agent *13 | 2.0 | 2.0 | 2.0 | 2.0 | 2.0 | 2.0 | 2.0 | 2.0 | 2.0 | 2.0 | 2.0 | 2.0 | 2.0 |
| Vulcanization accelerator 1 *14 | 1.5 | 1.5 | 1.5 | 1.5 | 1.5 | 1.5 | 1.5 | 1.5 | 1.5 | 1.5 | 1.5 | 1.5 | 1.5 |
| Vulcanization accelerator 2 *15 | 2.0 | 2.0 | 2.0 | 2.0 | 2.0 | 2.0 | 2.0 | 2.0 | 2.0 | 2.0 | 2.0 | 2.0 | 2.0 |
| Sulfur *16 | 1.5 | 1.5 | 1.5 | 1.5 | 1.5 | 1.5 | 1.5 | 1.5 | 1.5 | 1.5 | 1.5 | 1.5 | 1.5 |
| (b/a) | 0.06 | 0.10 | 0.06 | 0.10 | 0.04 | 0.04 | 0.05 | 0.04 | 0.04 | 0.05 | 0.04 | 0.02 | 0.10 |
| c/b | 0.8 | 0.5 | 0.8 | 1.0 | 1.3 | 2.5 | 2.0 | 3.8 | 2.5 | 2.0 | 2.5 | 5.0 | 2.0 |

(continued)

| | Standard Example 1 | Comparative Example 1 | Comparative Example 2 | Comparative Example 3 | Comparative Example 4 | Example 1 | Example 2 | Example 3 | Example 4 | Example 5 | 6 | Comparative Example 5 | Comparative Example 6 |
|---|---|---|---|---|---|---|---|---|---|---|---|---|---|
| Measurement result | | | | | | | | | | | | | |
| Scorch time | 100 | 93 | 94 | 95 | 103 | 106 | 101 | 108 | 103 | 102 | 107 | 110 | 97 |
| Wet grip performance (tanδ (0°C)) | 100 | 107 | 110 | 110 | 97 | 102 | 105 | 107 | 108 | 104 | 110 | 98 | 110 |

[Table 2]

| | Standard Example 2 | Comparative Example 7 | Comparative Example 8 | Comparative Example 9 | Comparative Example 10 | Example 7 | Example 8 | Example 9 | Example 10 | Example 11 | Comparative Example 11 | Comparative Example 12 | Example 12 |
|---|---|---|---|---|---|---|---|---|---|---|---|---|---|
| SBR *1 | 137.5 | 137.5 | 137.5 | 137.5 | 137.5 | 137.5 | 137.5 | 137.5 | 137.5 | 137.5 | 137.5 | 137.5 | - |
| Terminal-modified SBR *17 | - | - | - | - | - | - | - | - | - | - | - | - | 137.5 |
| Silica (blended amount a) *2 | 200.0 | 200.0 | 200.0 | 200.0 | 200.0 | 200.0 | 200.0 | 200.0 | 200.0 | 200.0 | 200.0 | 200.0 | 200.0 |
| Carbon black *3 | 10.0 | 10.0 | 10.0 | 10.0 | 10.0 | 10.0 | 10.0 | 10.0 | 10.0 | 10.0 | 10.0 | 10.0 | 10.0 |
| Aluminum hydroxide *4 | - | - | - | - | - | - | - | - | - | 20.0 | - | - | - |
| Resin 1 *5 | 30.0 | 30.0 | 30.0 | 30.0 | 30.0 | 30.0 | 30.0 | 30.0 | 30.0 | 30.0 | 30.0 | 30.0 | 30.0 |
| Silane coupling agent 1 (blended amount b) *6 | 12.0 | 20.0 | - | 20.0 | 8.0 | 8.0 | 10.0 | - | 10.0 | 8.0 | 4.0 | 20.0 | 8.0 |
| Silane coupling agent 2 (blended amount b) *7 | - | - | 12.0 | - | - | - | - | 8.0 | - | - | - | - | - |
| Alkyltriethoxysilane (blended amount c) *8 | 5.0 | 5.0 | 5.0 | 10.0 | 5.0 | 15.0 | 15.0 | 15.0 | - | 15.0 | 15.0 | 35.0 | 15.0 |
| Alkyldiethoxysilane (blended amount c) *9 | - | - | - | - | - | - | - | - | 15.0 | - | - | - | - |
| Oil *10 | 20.0 | 20.0 | 20.0 | 20.0 | 20.0 | 20.0 | 20.0 | 20.0 | 20.0 | 20.0 | 20.0 | 20.0 | 20.0 |
| Stearic acid *11 | 2.0 | 2.0 | 2.0 | 2.0 | 2.0 | 2.0 | 2.0 | 2.0 | 2.0 | 2.0 | 2.0 | 2.0 | 2.0 |
| Zinc oxide *12 | 2.0 | 2.0 | 2.0 | 2.0 | 2.0 | 2.0 | 2.0 | 2.0 | 2.0 | 2.0 | 2.0 | 2.0 | 2.0 |
| Anti-aging agent *13 | 2.0 | 2.0 | 2.0 | 2.0 | 2.0 | 2.0 | 2.0 | 2.0 | 2.0 | 2.0 | 2.0 | 2.0 | 2.0 |
| Vulcanization accelerator 1 *14 | 1.5 | 1.5 | 1.5 | 1.5 | 1.5 | 1.5 | 1.5 | 1.5 | 1.5 | 1.5 | 1.5 | 1.5 | 1.5 |

(continued)

| | Standard Example 2 | Comparative Example 7 | Comparative Example 8 | Comparative Example 9 | Comparative Example 10 | Example 7 | Example 8 | Example 9 | Example 10 | Example 11 | Comparative Example 11 | Comparative Example 12 | Example 12 |
|---|---|---|---|---|---|---|---|---|---|---|---|---|---|
| Vulcanization accelerator 2 *15 | 2.0 | 2.0 | 2.0 | 2.0 | 2.0 | 2.0 | 2.0 | 2.0 | 2.0 | 2.0 | 2.0 | 2.0 | 2.0 |
| Sulfur *16 | 1.5 | 1.5 | 1.5 | 1.5 | 1.5 | 1.5 | 1.5 | 1.5 | 1.5 | 1.5 | 1.5 | 1.5 | 1.5 |
| (b/a) | 0.06 | 0.10 | 0.06 | 0.10 | 0.04 | 0.04 | 0.05 | 0.04 | 0.05 | 0.04 | 0.02 | 0.10 | 0.04 |
| c/b | 0.4 | 0.3 | 0.4 | 0.5 | 0.6 | 1.9 | 1.5 | 1.9 | 1.5 | 1.9 | 3.8 | 1.8 | 1.9 |
| Measurement result | | | | | | | | | | | | | |
| Scorch time | 100 | 91 | 91 | 95 | 102 | 106 | 103 | 103 | 102 | 107 | 110 | 96 | 105 |
| Wet grip performance (tanδ (0°C)) | 100 | 110 | 115 | 114 | 97 | 102 | 105 | 111 | 105 | 110 | 98 | 110 | 104 |

[Table 3]

| | Standard Example 3 | Comparative Example 13 | Comparative Example 14 | Comparative Example 15 | Comparative Example 16 | Example 13 | Example 14 | Example 15 | Example 16 | Example 17 | Comparative Example 17 | Comparative Example 18 | Example 18 |
|---|---|---|---|---|---|---|---|---|---|---|---|---|---|
| SBR *1 | 137.5 | 137.5 | 137.5 | 137.5 | 137.5 | 137.5 | 137.5 | 137.5 | 137.5 | 137.5 | 137.5 | 137.5 | - |
| Terminal-modified SBR *17 | - | - | - | - | - | - | - | - | - | - | - | - | 137.5 |
| Silica (blended amount a) *2 | 150.0 | 150.0 | 150.0 | 150.0 | 150.0 | 150.0 | 150.0 | 150.0 | 150.0 | 150.0 | 150.0 | 150.0 | 150.0 |
| Carbon black *3 | 15.0 | 15.0 | 15.0 | 15.0 | 15.0 | 15.0 | 15.0 | 15.0 | 15.0 | 15.0 | 15.0 | 15.0 | 15.0 |
| Aluminum hydroxide *4 | 30.0 | 30.0 | 30.0 | 30.0 | 30.0 | 30.0 | 30.0 | 30.0 | 30.0 | 30.0 | 30.0 | 30.0 | 30.0 |
| Resin *18 | 60.0 | 60.0 | 60.0 | 60.0 | 60.0 | 60.0 | 60.0 | 60.0 | 60.0 | 60.0 | 60.0 | 60.0 | 60.0 |
| Silane coupling agent 1 (blended amount b) *6 | 9.0 | 15.0 | - | 15.0 | 6.0 | 6.0 | 7.5 | - | 7.5 | 6.0 | 3.0 | 15.0 | 6.0 |
| Silane coupling agent 2 (blended amount b) *7 | - | - | 9.0 | - | - | - | - | 6.0 | - | - | - | - | - |
| Alkyltriethoxysilane (blended amount c) *8 | 5.0 | 5.0 | 5.0 | 10.0 | 5.0 | 10.0 | 15.0 | 15.0 | - | 15.0 | 15.0 | 25.0 | 15.0 |
| Alkyldiethoxysilane (blended amount c) *9 | - | - | - | - | - | - | - | - | 15.0 | - | - | - | - |
| Oil *10 | 20.0 | 20.0 | 20.0 | 20.0 | 20.0 | 20.0 | 20.0 | 20.0 | 20.0 | 20.0 | 20.0 | 20.0 | 20.0 |
| Stearic acid *11 | 2.0 | 2.0 | 2.0 | 2.0 | 2.0 | 2.0 | 2.0 | 2.0 | 2.0 | 2.0 | 2.0 | 2.0 | 2.0 |
| Zinc oxide *12 | 2.0 | 2.0 | 2.0 | 2.0 | 2.0 | 2.0 | 2.0 | 2.0 | 2.0 | 2.0 | 2.0 | 2.0 | 2.0 |
| Anti-aging agent *13 | 2.0 | 2.0 | 2.0 | 2.0 | 2.0 | 2.0 | 2.0 | 2.0 | 2.0 | 2.0 | 2.0 | 2.0 | 2.0 |
| Vulcanization accelerator 1 *14 | 1.5 | 1.5 | 1.5 | 1.5 | 1.5 | 1.5 | 1.5 | 1.5 | 1.5 | 1.5 | 1.5 | 1.5 | 1.5 |

(continued)

| | Standard Example 3 | Comparative Example 13 | Comparative Example 14 | Comparative Example 15 | Comparative Example 16 | Example 13 | Example 14 | Example 15 | Example 16 | Example 17 | Comparative Example 17 | Comparative Example 18 | Example 18 |
|---|---|---|---|---|---|---|---|---|---|---|---|---|---|
| Vulcanization accelerator 2 *15 | 2.0 | 2.0 | 2.0 | 2.0 | 2.0 | 2.0 | 2.0 | 2.0 | 2.0 | 2.0 | 2.0 | 2.0 | 2.0 |
| Sulfur *16 | 1.5 | 1.5 | 1.5 | 1.5 | 1.5 | 1.5 | 1.5 | 1.5 | 1.5 | 1.5 | 1.5 | 1.5 | 1.5 |
| (b/a) | 0.06 | 0.10 | 0.06 | 0.10 | 0.04 | 0.04 | 0.05 | 0.04 | 0.05 | 0.04 | 0.02 | 0.10 | 0.04 |
| c/b | 0.6 | 0.3 | 0.6 | 0.7 | 0.8 | 1.7 | 2.0 | 2.5 | 2.0 | 2.5 | 5.0 | 1.7 | 2.5 |
| Measurement result | | | | | | | | | | | | | |
| Scorch time | 100 | 92 | 92 | 96 | 102 | 106 | 102 | 104 | 102 | 108 | 110 | 96 | 106 |
| Wet grip performance (tanδ (0°C)) | 100 | 108 | 112 | 112 | 95 | 102 | 105 | 110 | 107 | 110 | 97 | 110 | 112 |

*1: SBR (Nipol NS522, available from ZS Elastomer Co., Ltd.; styrene content = 39 mass%; oil-extended product with 37.5 parts by mass of an oil component added to 100 parts by mass of an SBR; Tg of SBR excluding the oil component = -25°C)
*2: Silica (Ultrasil 7000 GR, available from Evonik Industries AG; nitrogen adsorption specific surface area $N_2SA$ = 172 $m^2/g$)
*3: Carbon black (SEAST 9, available from Tokai Carbon Co., Ltd.; nitrogen adsorption specific surface area $N_2SA$ = 142 $m^2/g$)
*4: Aluminum hydroxide (BF013, available from Nippon Light Metal Co., Ltd.)
*5: Resin 1 (Neopolymer 140S, available from ENEOS Corporation)
*6: Silane coupling agent 1 (Si69, available from Evonik Industries AG)
*7: Silane coupling agent 2 (Si363, available from Evonik Industries AG; having a mercapto group at the terminal)
*8: Alkyltriethoxysilane (KBE-3083, available from Shin-Etsu Chemical Co., Ltd.; octyltriethoxysilane)
*9: Alkyldiethoxysilane (KBE-22, available from Shin-Etsu Chemical Co., Ltd.; dimethyldiethoxysilane)
*10: Oil (Extract No. 4S, available from Showa Shell Sekiyu K.K.)
*11: Stearic acid (Beads Stearic Acid YR, available from NOF Corporation)
*12: Zinc oxide (Zinc Oxide III, available from Seido Chemical Industry Co., Ltd.)
*13: Anti-aging agent (6PPD, available from Flexsys)
*14: Vulcanization accelerator 1 (SANCELER D-G, available from Sanshin Chemical Industry Co., Ltd.)
*15: Vulcanization accelerator 2 (NOCCELER CZ-G, available from Ouchi Shinko Chemical Industrial Co., Ltd.)
*16: Sulfur (Golden Flower oil treated sulfur powder, available from Tsurumi Chemical Industry Co., Ltd.)
*17: Terminal-modified SBR (trade name TUFDENE E581, available from Asahi Kasei Corporation; styrene content = 36 mass%; oil-extended product with 37.5 parts by mass of an oil component added to 100 parts by mass of an SBR; the terminal modified with a hydroxy group; Tg of SBR excluding the oil component = -27°C)
*18: Resin 2 (YS Resin TO125, available from Yasuhara Chemical Co., Ltd.)

From the results of Tables 1 to 3, it is found that the rubber compositions of the respective Examples contain a diene-based rubber, silica, a sulfur-containing silane coupling agent, and an alkylalkoxysilane compound, that the blended amount of the silica is from 80 to 300 parts by mass per 100 parts by mass of the diene-based rubber, that the alkylalkoxysilane compound is alkyldiethoxysilane or alkyltriethoxysilane, and that the blended amounts of the sulfur-containing silane coupling agent and the alkylalkoxysilane compound satisfy Expressions (1) and (2) described above, and therefore that the rubber compositions have excellent scorch resistance without impairing wet grip performance as compared with Standard Example 1, 2, or 3.

In contrast, in Comparative Example 1, the (b/a) and the c/b in Expressions (1) and (2) described above were 0.10 and 0.5, respectively, and therefore the scorch time was deteriorated.

In Comparative Example 2, the (b/a) and the c/b in Expressions (1) and (2) described above were 0.06 and 0.8, respectively, and therefore the scorch time was deteriorated.

In Comparative Example 3, the (b/a) and the c/b in Expressions (1) and (2) described above were 0.10 and 1.0, respectively, and therefore the scorch time was deteriorated.

In Comparative Example 4, the c/b in Expressions (1) and (2) described above was 1.3, and therefore the wet grip performance was deteriorated.

In Comparative Example 5, the (b/a) in Expressions (1) and (2) described above was 0.02, and therefore the wet grip performance was deteriorated.

In Comparative Example 6, the (b/a) in Expressions (1) and (2) described above was 0.10, and therefore the scorch time was deteriorated.

In Comparative Example 7, the (b/a) and the c/b in Expressions (1) and (2) described above were 0.10 and 0.3, respectively, and therefore the scorch time was deteriorated.

In Comparative Example 8, the (b/a) and the c/b in Expressions (1) and (2) described above were 0.06 and 0.4, respectively, and therefore the scorch time was deteriorated.

In Comparative Example 9, the (b/a) and the c/b in Expressions (1) and (2) described above were 0.10 and 0.5, respectively, and therefore the scorch time was deteriorated.

In Comparative Example 10, the c/b in Expressions (1) and (2) described above was 0.6, and therefore the wet grip performance was deteriorated.

In Comparative Example 11, the (b/a) in Expressions (1) and (2) described above was 0.02, and therefore the wet grip performance was deteriorated.

In Comparative Example 12, the (b/a) in Expressions (1) and (2) described above was 0.10, and therefore the scorch time was deteriorated.

In Comparative Example 13, the (b/a) and the c/b in Expressions (1) and (2) described above were 0.10 and 0.3, respectively, and therefore the scorch time was deteriorated.

In Comparative Example 14, the (b/a) and the c/b in Expressions (1) and (2) described above were 0.06 and 0.3, respectively, and therefore the scorch time was deteriorated.

In Comparative Example 15, the (b/a) and the c/b in Expressions (1) and (2) described above were 0.10 and 0.7, respectively, and therefore the scorch time was deteriorated.

In Comparative Example 16, the c/b in Expressions (1) and (2) described above was 0.8, and therefore the wet grip performance was deteriorated.

In Comparative Example 17, the (b/a) in Expressions (1) and (2) described above was 0.02, and therefore the wet grip performance was deteriorated.

In Comparative Example 18, the (b/a) in Expressions (1) and (2) described above was 0.10, and therefore the scorch time was deteriorated.

The present invention includes the following aspects.

Aspect 1:

A rubber composition for a tire containing a diene-based rubber, silica, a sulfur-containing silane coupling agent, and an alkylalkoxysilane compound,

a blended amount of the silica being from 80 to 300 parts by mass per 100 parts by mass of the diene-based rubber, the alkylalkoxysilane compound being alkyldiethoxysilane or alkyltriethoxysilane, and
blended amounts of the sulfur-containing silane coupling agent and the alkylalkoxysilane compound satisfying Expressions (1) and (2) described below:

$$0.03 < (b/a) < 0.06 \quad (1)$$

$$c/b \geq 1.5 \quad (2)$$

where a represents a blended amount (parts by mass) of the silica per 100 parts by mass of the diene-based rubber, b represents a blended amount (parts by mass) of the sulfur-containing silane coupling agent per 100 parts by mass of the diene-based rubber, and c represents a blended amount (parts by mass) of the alkylalkoxysilane compound per 100 parts by mass of the diene-based rubber.

Aspect 2:

The rubber composition for a tire according to Aspect 1, in which the sulfur-containing silane coupling agent is a sulfur-containing silane coupling agent having a mercapto group.

Aspect 3:

The rubber composition for a tire according to Aspect 1 or 2, further containing 15 parts by mass or more of aluminum hydroxide per 100 parts by mass of the diene-based rubber.

Aspect 4:

The rubber composition for a tire according to any of Aspects 1 to 3, in which a styrene-butadiene copolymer rubber occupies 70 parts by mass or more in 100 parts by mass of the diene-based rubber.

Aspect 5:

The rubber composition for a tire according to Aspect 4, in which the styrene-butadiene copolymer rubber has a styrene content of from 20 to 45 mass% and/or a glass transition temperature (Tg) of from -60 to -10°C.

Aspect 6:

The rubber composition for a tire according to any of Aspects 1 to 5, in which the silica has a nitrogen adsorption specific surface area $N_2SA$ of from 100 to 300 $m^2/g$.

Aspect 7:

The rubber composition for a tire according to any of Aspects 1 to 6, in which an alkyl group in the alkyldiethoxysilane is a methyl group.

Aspect 8:

The rubber composition for a tire according to any of Aspects 1 to 6, in which an alkyl group in the alkyltriethoxysilane is an alkyl group having from 7 to 20 carbon atoms.

Aspect 9:

A tire using the rubber composition for a tire described in any of Aspects 1 to 8.

## Claims

**1.** A rubber composition for a tire comprising a diene-based rubber, silica, a sulfur-containing silane coupling agent, and an alkylalkoxysilane compound,

a blended amount of the silica being from 80 to 300 parts by mass per 100 parts by mass of the diene-based rubber,
the alkylalkoxysilane compound being alkyldiethoxysilane or alkyltriethoxysilane, and
blended amounts of the sulfur-containing silane coupling agent and the alkylalkoxysilane compound satisfying Expressions (1) and (2) described below:

$$0.03 < (b/a) < 0.06$$

$$c/b \geq 1.5 \quad (2)$$

where a represents a blended amount (parts by mass) of the silica per 100 parts by mass of the diene-based rubber, b represents a blended amount (parts by mass) of the sulfur-containing silane coupling agent per 100 parts by mass of the diene-based rubber, and c represents a blended amount (parts by mass) of the alkylalkoxysilane compound per 100 parts by mass of the diene-based rubber.

**2.** The rubber composition for a tire according to claim 1, wherein the sulfur-containing silane coupling agent is a sulfur-containing silane coupling agent having a mercapto group.

**3.** The rubber composition for a tire according to claim 1, further comprising 15 parts by mass or more of aluminum hydroxide per 100 parts by mass of the diene-based rubber.

**4.** The rubber composition for a tire according to claim 1, wherein a styrene-butadiene copolymer rubber occupies 70 parts by mass or more in 100 parts by mass of the diene-based rubber.

**5.** The rubber composition for a tire according to claim 4, wherein the styrene-butadiene copolymer rubber has a styrene content of from 20 to 45 mass% and/or a glass transition temperature (Tg) of from -60 to -10°C.

**6.** The rubber composition for a tire according to claim 1, wherein the silica has a nitrogen adsorption specific surface area $N_2SA$ of from 100 to 300 $m^2/g$.

**7.** The rubber composition for a tire according to claim 1, wherein an alkyl group in the alkyldiethoxysilane is a methyl group.

**8.** The rubber composition for a tire according to claim 1, wherein an alkyl group in the alkyltriethoxysilane is an alkyl group having from 7 to 20 carbon atoms.

**9.** A tire using the rubber composition for a tire described in claim 1.

## INTERNATIONAL SEARCH REPORT

International application No.
**PCT/JP2024/019885**

**A. CLASSIFICATION OF SUBJECT MATTER**

***C08L 9/00***(2006.01)i; ***B60C 1/00***(2006.01)i; ***C08K 3/22***(2006.01)i; ***C08K 3/36***(2006.01)i; ***C08K 5/5415***(2006.01)i; ***C08K 5/548***(2006.01)i
FI: C08L9/00; B60C1/00 A; C08K3/22; C08K3/36; C08K5/5415; C08K5/548

According to International Patent Classification (IPC) or to both national classification and IPC

**B. FIELDS SEARCHED**

Minimum documentation searched (classification system followed by classification symbols)

C08L9/00; B60C1/00; C08K3/22; C08K3/36; C08K5/5415; C08K5/548

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-279028 A (DEGUSSA AG) 10 October 2001 (2001-10-10) claims, paragraph [0025], examples | 1-2, 6, 8-9 |
| Y | | 3 |
| A | | 4-5, 7 |
| X | JP 10-182885 A (THE YOKOHAMA RUBBER CO., LTD.) 07 July 1998 (1998-07-07) claims, paragraphs [0021], [0036], examples | 1, 6-7, 9 |
| Y | | 3 |
| A | | 2, 4-5, 8 |
| X | JP 2011-32402 A (TOYO TIRE & RUBBER CO., LTD.) 17 February 2011 (2011-02-17) claims, paragraphs [0010], [0020]-[0021], examples | 1-2, 4-6, 8-9 |
| Y | | 3 |
| A | | 7 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 July 2024** | **23 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/019885**

**C. DOCUMENTS CONSIDERED TO BE RELEVANT**

| Category* | Citation of document, with indication, where appropriate, of the relevant passages | Relevant to claim No. |
|---|---|---|
| Y | JP 2023-47426 A (THE YOKOHAMA RUBBER CO., LTD.) 06 April 2023 (2023-04-06)<br>claims, examples | 3 |
| A | JP 2020-186321 A (SUMITOMO RUBBER INDUSTRIES, LTD.) 19 November 2020 (2020-11-19)<br>paragraph [0106] | 5 |
| A | JP 2013-213183 A (THE YOKOHAMA RUBBER CO., LTD.) 17 October 2013 (2013-10-17)<br>entire text | 1-9 |

Form PCT/ISA/210 (second sheet) (July 2022)

**INTERNATIONAL SEARCH REPORT**
**Information on patent family members**

International application No.
**PCT/JP2024/019885**

| Patent document cited in search report | Publication date (day/month/year) | Patent family member(s) | Publication date (day/month/year) |
|---|---|---|---|
| JP 2001-279028 A | 10 October 2001 | US 2001/0051684 A1<br>claims, paragraph [0043], examples<br>EP 1142948 A2<br>KR 10-2001-0093710 A | |
| JP 10-182885 A | 07 July 1998 | (Family: none) | |
| JP 2011-32402 A | 17 February 2011 | (Family: none) | |
| JP 2023-47426 A | 06 April 2023 | WO 2023/047752 A1 | |
| JP 2020-186321 A | 19 November 2020 | (Family: none) | |
| JP 2013-213183 A | 17 October 2013 | US 2013/0237653 A1<br>entire text<br>CN 103304858 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013133432 A
- JP 2019104484 A
- JP 6969243 B
- JP 5888361 B
- JP 5644838 B
- JP 7397272 B
- WO 2014002750 A